# EUROPÄISCHE PATENTSCHRIFT

(11) **EP 3 556 218 B1**
(45) Veröffentlichungstag und Bekanntmachung des Hinweises auf die Patenterteilung: **11.08.2021**
(21) Anmeldenummer: 19178131.9
(22) Anmeldetag: 04.06.2019
(51) Int. Cl.: A23L 2/00, B67D 1/04, A23L 2/40, A23L 2/54, A23L 2/56

(54) **AROMATISIERTES, PHYSIKALISCHES TREIBMITTEL**
AROMATIZED PHYSICAL BLOWING AGENT
AGENT GONFLANT PHYSIQUE AROMATISÉ

(43) Veröffentlichungstag der Anmeldung: 23.10.2019
(73) Patentinhaber: Soda Taste GmbH, 6020 Innsbruck (AT)
(72) Erfinder: BUSCH, Andreas, 6166 Fulpmes (AT)
(74) Vertreter: Torggler & Hofinger Patentanwälte

(56) Entgegenhaltungen:
- DE-A1- 3 422 734
- FR-A1- 2 618 308
- US-A- 4 553 573
- US-A1- 2016 325 977

## Beschreibung

Die vorliegende Erfindung betrifft ein Verfahren zur Herstellung eines mit wenigstens einem aromatisierten, in Form eines Fluides vorliegenden, für den Verzehr geeigneten, physikalischen Treibmittel befüllten Druckbehälters nach dem Oberbegriff des Anspruches 1 sowie ein Verfahren zur Herstellung eines zum Verzehr geeigneten aromatisierten Getränkes mittels eines wenigstens eine Halterung zur Aufnahme eines Druckbehälters aufweisenden Getränkespenders. Weiters betrifft die Erfindung einen Druckbehälter zur Aufnahme von physikalischen Treibmitteln nach dem Oberbegriff des Anspruches 8. Schließlich betrifft die Erfindung einen Getränkespender mit wenigstens einer Halterung zur Aufnahme wenigstens eines Druckbehälters und wenigstens einer Zuführleitung.

Ein physikalisches Treibmittel, ein Druckbehälter mit physikalischen Treibmitteln, ein Getränkespender sowie ein Verfahren zum Zubereiten eines mit physikalischen Treibmitteln versetzen Getränkes sind bereits aus der Schrift DE 101 28 620 A1 bekannt, welche Mittel zur Karbonisierung von Wasser und/oder Wasser mit Aroma-Trägern aufweist.

Nachteilig am Stand der Technik ist, dass das durch die Kartusche karbonisierte Getränk eine gesonderte Quelle zur Aromatisierung, zum Beispiel in Form von Sirup, Aromastoffen, Geschmacksstoffe, Essenzen, etc. benötigt und ein karbonisiertes, aromatisiertes Getränk nur über wenigstens zwei Prozessschritte hergestellt werden kann. Des Weiteren ist es bei fehlender gesonderter Quelle der Aromatisierung nicht möglich, das Getränk mit Geschmack zu versehen.

Ein Verfahren und eine Vorrichtung zum Ausgeben eines Getränkes auf Malzbasis ist aus der Schrift US 2016/325977 A1 bekannt, wobei in einer Mischvorrichtung in Form eines Fasses Flüssigkeitsquellen gemischt werden. Ein Industrieartikel zur Herstellung kohlensäurehaltiger Getränke ist aus der Schrift DE 34 22 734 A1 bekannt, wobei eine Syphonpatrone mit einem Durchbruchselement verwendet wird. Ein Verfahren zur Gewinnung eines kohlensäurehaltigen Getränks ist aus der Schrift FR 2 618 308 A1 bekannt, wobei ein Aromatisierungsstoffdiffusor herangezogen wird.

Eine Aufgabe gemäß einem ersten Aspekt der vorliegenden Erfindung besteht darin, ein gegenüber dem Stand der Technik verbessertes Verfahren zur Herstellung eines mit aromatisierten physikalischen Treibmittel befüllten Druckbehälters anzugeben.

Eine weitere Aufgabe gemäß einem zweiten Aspekt der vorliegenden Erfindung besteht darin, ein gegenüber dem Stand der Technik verbessertes Verfahren zur Herstellung eines zum Verzehr geeigneten aromatisierten Getränkes anzugeben.

Eine weitere Aufgabe gemäß einem dritten Aspekt der vorliegenden Erfindung besteht daher darin, einen mit physikalischen Treibmitteln gefüllten Druckbehälter anzugeben, wobei eine gesonderte Geschmacksstoffquelle zur Anreicherung des physikalischen Treibmittels mit Geschmacksstoffen vermieden wird.

Eine weitere Aufgabe gemäß einem vierten Aspekt besteht darin, einen Getränkespender anzugeben, wobei zusätzliche Geschmacksstoffquellen nicht mehr notwendig sind und bei fehlender Geschmacksstoffquellen dennoch das karbonisierte Getränk mit Geschmack versehen werden kann.

Der Terminus "Fluid" bedeutet, dass ein Stoff ein Schubmodul von Null aufweist und sich somit unter Schwerkräften kontinuierlich verformen lässt. Im Unterschied zu Feststoffen kann es sich hierbei um Flüssigkeiten, Gase oder ein Gemisch aus Flüssigkeiten und Gasen handeln.

Neigt sich der Druck im Druckbehälter dem Ende zu, so kann ein Gemisch aus gasförmigem und flüssigem physikalischen Treibmittel vorliegen, welche weiterhin in die Kategorie des Fluides eingeordnet werden.

Der Terminus "lebensmittelecht" bedeutet, dass ein Stoff keine geruchliche und/oder geschmackliche Wirkung auf ein Lebensmittel hat und unterscheidet sich somit von der Terminologie "zu einem zum Verzehr geeigneten Stoff".

Die Aufgabe gemäß dem ersten Aspekt wird durch die Merkmale des Anspruchs 1 gelöst.

Es ist demnach erfindungsgemäß vorgesehen, dass der Druckbehälter einen Grundkörper in Form einer Kartusche mit wenigstens einem Gewindeaufsatz und wenigstens einer Aufnahme für einen Getränkespender umfasst, wobei wenigstens ein Füllventil zur Aufnahme wenigstens eines physikalischen Treibmittels an dem wenigstens einen Gewindeaufsatz angeordnet ist und wobei in den Druckbehälter der wenigstens eine Geschmacksstoff über wenigstens einen Dosierer zugegeben wird und dem Druckbehälter nach dem Anschluss wenigstens einer Druckleitung wenigstens ein physikalisches Treibmittel zugegeben wird, wobei der zugeführte wenigstens eine Geschmacksstoff durch den Einfüllvorgang des wenigstens einen physikalischen Treibmittels und/oder durch das bereits eingebrachte wenigstens eine physikalische Treibmittel mit dem wenigstens einen physikalischen Treibmittel in Verbindung gebracht wird und/oder der wenigstens eine Dosierer, vorzugsweise in Form einer Pipette, den wenigstens einen Geschmacksstoff, vorzugsweise tröpfchenweise, dem Druckbehälter vor der Zugabe des wenigstens einen physikalischen Treibstoffes zugeführt wird und/oder der wenigstens eine Geschmacksstoff über wenigstens eine Bypassleitung, vorzugsweise wobei die Bypassleitung gemeinsam mit der wenigstens einen Druckleitung in wenigstens einem Anschlussventil münden, während der Befüllung des Druckbehälters mit dem wenigstens einen physikalischen Treibmittel, vorzugsweise sukzessive, über den wenigstens einen Dosierer der wenigstens einen Bypassleitung beigemengt wird.

Dadurch wird es ermöglicht, dass im Druckbehälter wenigstens ein physikalisches Treibmittel vorliegt, welches bereits mit wenigstens einem Geschmacksstoff versehen ist.

Der Druckbehälter kann dadurch ohne zusätzliche Prozessschritte zur Verwendung der Herstellung von aromatisierten, mit physikalischen Treibmitteln versehenen Getränken verwendet werden. Zusätzliche Geschmacksstoffquellen werden daher nicht benötigt.

Die Aufgabe gemäß dem zweiten Aspekt wird durch die Merkmale des Anspruchs 7 gelöst.

Es ist demnach erfindungsgemäß vorgesehen, dass im Druckbehälter wenigstens ein aromatisiertes, in Form eines Fluides vorliegendes, für den Verzehr geeignetes, physikalisches Treibmittel angeordnet ist und wobei der Druckbehälter einen Grundkörper in Form einer Kartusche mit wenigstens einem Gewindeaufsatz und wenigstens einer Aufnahme für einen Getränkespender umfasst, wobei wenigstens ein Füllventil zur Aufnahme wenigstens eines physikalischen Treibmittels an dem wenigstens einen Gewindeaufsatz angeordnet ist, wobei das physikalische Treibmittel durch wenigstens einen Geschmacksstoff aromatisiert ist, und wenigstens eine Aufnahme des wenigstens einen Druckbehälters über wenigstens eine Zuführleitung eines Getränkespenders mit einem zum Verzehr geeigneten Wasser eines Gefäßes verbunden wird und dem Wasser das aromatisierte, physikalische Treibmittel zugeführt wird, sodass das Wasser im Gefäß in einem Prozessschritt mit dem wenigstens einen physikalischen Treibmittel und dem Geschmacksstoff angereichert wird und die Dosierung des Geschmacksstoffes über die Dosierung der Anreicherung durch das physikalische Treibmittel beeinflussbar ist.

Das Getränk ist nach dem Hinzufügen des aromatisierten, physikalischen Treibmittels sowohl mit Geschmackstoffen als auch mit physikalischen Treibmitteln versehen. Das Resultat ist ein karbonisiertes und aromatisiertes Getränk wie beispielsweise ein Geschmack tragendes Wasser mit Kohlensäure, welches in einem Prozessschritt aus zum Verzehr geeignetem Wasser hergestellt wird.

Dadurch wird es ermöglicht, dass das Wasser im Gefäß in einem Prozessschritt mit wenigstens einem physikalischen Treibmittel und wenigstens einem Geschmacksstoff angereichert werden kann.

Dies bietet mehr Komfort in der Handhabung und ist benutzerfreundlicher, da ohne ein nachträgliches Hinzufügen von Geschmacksstoffen Zeit in der Herstellung von aromatisierten, mit physikalischen Treibmittel versehenen Getränken gespart wird.

Hinzu kommt die positive Eigenschaft, dass keine zusätzlichen Komponenten zur Geschmacksmittelversorgung installiert werden müssen, da bereits eine aromatisierte Form des wenigstens einen physikalischen Treibmittels vorliegt.

Unterschiedliche Kartuschen mit unterschiedlichen Konzentrationen bieten dem Benutzer des Getränkespenders zudem die Möglichkeit, dem Wasser die individuell gewünschte Dosis an Geschmacksstoffen und physikalischen Treibmitteln zuzuführen.

Weiters ist die Dosierung des Geschmacksstoffes über die Dosierung der Anreicherung durch das physikalische Treibmittel beeinflussbar.

Die Zusammensetzung des wenigstens einen Geschmacksstoffes ist an sich beliebig. Besonders bevorzugt ist jedoch ein Geschmacksstoff, welcher in konzentrierter Form beispielsweise als Essenz hinzugefügt wird.

Die Aufgabe gemäß dem dritten Aspekt wird durch die Merkmale des Anspruchs 8 gelöst.

Es ist demnach erfindungsgemäß vorgesehen, dass der Druckbehälter einen Grundkörper in Form einer Kartusche mit wenigstens einem Gewindeaufsatz und wenigstens einer Aufnahme für einen Getränkespender umfasst, wobei wenigstens ein Füllventil zur Aufnahme wenigstens eines physikalischen Treibmittels an dem wenigstens einen Gewindeaufsatz angeordnet ist, wobei vorzugsweise vorgesehen ist, dass am wenigstens einen Füllventil wenigstens ein Bypassventil zur Aufnahme des wenigstens einen Geschmacksstoffes angeordnet ist und/oder wenigstens ein Anschlussventil an dem wenigstens einen Gewindeaufsatz angeordnet ist, wobei das wenigstens eine physikalische Treibmittel und der wenigstens eine Geschmacksstoff über wenigstens eine Druckleitung dem wenigstens einen Anschlussventil zuführbar sind.

Dadurch wird es ermöglicht, dass der Druckbehälter keine zusätzlichen Mittel zur Anreicherung des wenigstens einen physikalischen Treibmittels mit Geschmacksstoffen benötigt, da der wenigstens eine Geschmacksstoff bereits in Verbindung mit dem wenigstens einen physikalischen Treibstoff im Druckbehälter vorliegt.

Die Form des Druckbehälters ist an sich beliebig. Besonders bevorzugt ist jedoch ein metallischer Druckbehälter, der einem erhöhten Druck standhält und für Druckfüllungen im Bereich von 100 bar bis 350 bar ausgelegt ist.

Die Aufgabe gemäß dem vierten Aspekt wird durch die Merkmale des Anspruchs 12 gelöst.

Es ist demnach erfindungsgemäß vorgesehen, dass wenigstens ein Druckbehälter nach einem der Ansprüche 8 bis 10 in der wenigstens einen Halterung angeordnet ist und über die wenigstens eine Zuführleitung mit wenigstens einem Gefäß verbindbar ist, wobei im Druckbehälter wenigstens ein aromatisiertes, in Form eines Fluides vorliegendes, für den Verzehr geeignetes, physikalisches Treibmittel angeordnet ist und wobei der Druckbehälter einen Grundkörper in Form einer Kartusche mit wenigstens einem Gewindeaufsatz und wenigstens einer Aufnahme für einen Getränkespender umfasst, wobei wenigstens ein Füllventil zur Aufnahme wenigstens eines physikalischen Treibmittels an dem wenigstens einen Gewindeaufsatz angeordnet ist.

Dadurch wird es ermöglicht, dass das aromatisierte, physikalische Treibmittel dem Gefäß direkt zuführbar ist. Es benötigt somit keine externen Hilfsmittel, um das physikalische Treibmittel vor und/oder nach der Zuführung zum Gefäß mit Geschmacksstoffen zu versehen, da bereits alle dafür notwendigen Komponenten im Druckbehälter, welcher in der Halterung angeordnet ist, vorliegen.

Die Form der Zuführleitung ist im Allgemeinen beliebig. Besonders bevorzugt ist jedoch eine Ausgestaltung mit einer Düse am Ende der Zuführleitung und/oder einer Zuführleitung aus Kunststoff.

Vorteilhafte Ausführungsformen der Erfindung sind in den abhängigen Ansprüchen definiert.

Gemäß einer vorteilhaften Ausgestaltung der Erfindung ist vorgesehen, der wenigstens eine Geschmacksstoff in flüssiger Phase hinzugefügt wird.

Die flüssige Phase des wenigstens einen Geschmacksstoffes hat den Vorteil, dass es zu einer besonders effektiven Durchmischung des wenigstens einen Geschmacksstoffes mit dem wenigstens einen physikalischen Treibmittel kommt.

Weiters ist die Beimengung eines flüssigen Stoffes zum wenigstens einen physikalischen Treibmittel einfacher in der Durchführung, da die materialspezifischen Eigenschaften von Flüssigkeiten einen geringeren technischen Aufwand in der Handhabung benötigen.

Des Weiteren sind eine Lagerung und ein Transport von flüssigen Geschmacksstoffen kostenschonend und bedürfen weniger Platzressourcen.

Vorteilhafter Weise ist vorgesehen, dass das wenigstens eine physikalische Treibmittel in einer Mischung aus wenigstens einem weiteren physikalischen Treibmittel, insbesondere in einer Mischung aus Kohlenstoffdioxid und/oder Stickstoff und/oder Sauerstoff und/oder Lachgas, vorliegt.

Durch eine Mischung aus verschiedenen physikalischen Treibmitteln können die materialspezifischen Eigenschaften des in der Mischung vorliegenden physikalischen Treibmittels an die individuellen Anforderungen an das zu verwendende physikalische Treibmittel optimal angepasst werden.

Die Art des physikalischen Treibmittels ist an sich beliebig, besonders bevorzugt ist jedoch die Verwendung von Kohlenstoffdioxid für die Anwendung bei Flüssigkeiten und die Verwendung von Lachgas für die Anwendung bei Stoffen cremiger Konsistenz wie beispielsweise Schlagsahne.

Da der wenigstens eine Geschmacksstoff nicht unter Druck in den Druckbehälter eingebracht werden muss, kommt es zu keiner Druckminderung durch den Einfüllprozess des wenigstens einen Geschmacksstoffes, weil der wenigstens eine Geschmacksstoff bei der Befüllung mit dem wenigstens einen physikalischen Treibmittel bereits im Druckbehälter vorhanden ist.

Durch wenigstens einen Dosierer wird es ermöglicht, dem Druckbehälter die optimale Dosis des wenigstens einen Geschmacksstoffes in Abhängigkeit der Dosis des wenigstens einen physikalischen Treibmittels zuzuführen.

Die Bypassleitung birgt den Vorteil, dass während dem Einfüllvorgang des wenigstens einen physikalischen Treibmittels in den Druckbehälter der wenigstens eine Geschmacksstoff parallel zugeführt werden kann.

Dadurch wird der Prozess der Befüllung des Druckbehälters beschleunigt, da ein sequenziell durchzuführender Prozessschritt durch die technisch gewählte Konstruktion wegfällt.

Weiters erfolgt durch Zufügung des wenigstens einen Geschmacksstoffes über die Bypassleitung eine besonders günstige Vermischung des wenigstens einen Geschmacksstoffes mit dem wenigstens einen physikalischen Treibmittel.

Eine vorteilhafte Variante besteht darin, dass die Zuführung des wenigstens einen Geschmacksstoffes in der wenigstens einen Druckleitung (9) und/oder in der wenigstens einen Bypassleitung und/oder im Wesentlichen bei der Einmündung der Druckleitung in das Anschlussventil erfolgt und/oder der erste Kontakt zwischen dem wenigstens einen Geschmacksstoff und dem wenigstens einen physikalischen Treibmittel im Druckbehälter stattfindet.

Dadurch wird es ermöglicht, dass abhängig von der Ausgestaltung des Druckbehälters eine optimale Vermischung des wenigstens einen Geschmacksstoffes mit dem wenigstens einen physikalischen Treibmittel erfolgt.

Besonders bevorzugt ist, dass der wenigstens eine Geschmacksstoff vor und/oder nach der Befüllung des Druckbehälters mit wenigstens einem physikalischen Treibmittel oder zwischen zwei Phasen der Befüllung des Druckbehälters mit wenigstens einem physikalischen Treibmittel dem wenigstens einen physikalischen Treibmittel beigemengt wird.

Dadurch kann bei unterschiedlichen Ausführungen des Druckbehälters die ideale Vermischung des wenigstens einen Geschmacksstoffes mit dem wenigstens einen physikalischen Treibmittel gewährleistet werden.

Bei einem Ausführungsbeispiel der Erfindung ist vorgesehen, dass der Druckbehälter über wenigstens eine Druckleitung mit wenigstens einem weiteren Druckbehälter, vorzugsweise in Form eines Tanks, verbunden ist und der Druckbehälter über diese wenigstens eine Druckleitung und diesen wenigstens einen weiteren Druckbehälter befüllt wird.

Die Herstellung des wenigstens einen aromatisierten, physikalischen Treibmittels im weiteren Druckbehälter ist effizienter, da größere Mengen in einem Prozessschritt hergestellt werden und in kleineren Portionen an die Druckbehälter weitergegeben werden können.

Zudem ist ein Abfüllgang mehrerer Druckbehälter parallel möglich.

Gemäß einem bevorzugten Ausführungsbeispiel der Erfindung ist vorgesehen, dass das aromatisierte physikalische Treibmittel bereits im wenigstens einen weiteren Druckbehälter angeordnet ist und/oder der wenigstens eine Geschmacksstoff über wenigstens einen Dosierer dem wenigstens einen weiteren Druckbehälter zugeführt wird, wobei das wenigstens eine physikalische Treibmittel vor und/oder nach der Beifügung des wenigstens einen physikalischen Treibmittels in den wenigstens einen weiteren Druckbehälter im wenigstens einen weiteren Druckbehälter angeordnet ist, und/oder der wenigstens eine Geschmacksstoff über wenigstens einen Dosierer und wenigstens einer Bypassleitung dem wenigstens einen physikalischen Treibmittel zugeführt wird, wobei die wenigstens eine Bypassleitung mit der wenigstens einen Druckleitung verbunden ist.

Durch diese Ausführung erfolgt ein rascherer Füllvorgang der Druckbehälter, da die Beifügung des wenigstens einen Geschmacksstoffes zum wenigstens einen physikalischen Treibmittel bereits vor dem Eintritt in den Druckbehälter erfolgt und somit das wenigstens eine aromatisierte, physikalische Treibmittel direkt in den Druckbehälter eingefüllt werden kann.

Als günstig hat sich erwiesen, dass der wenigstens eine Druckbehälter in Form eines LKW-Tanks vorgesehen ist und wenigstens ein Einlass zur Zufuhr des wenigstens einen physikalischen Treibmittels und des wenigstens einen Geschmacksstoffes und/oder des wenigstens einen aromatisierten physikalischen Treibmittels vorgesehen ist, wobei vorzugsweise vorgesehen ist, dass wenigstens ein Einlass für die Zufuhr des wenigstens einen physikalischen Treibmittels und wenigstens ein Einlass zur Zufuhr des wenigstens einen Geschmacksstoffes vorgesehen sind, wobei der wenigstens eine Geschmacksstoff mit dem wenigstens einen physikalischen Treibmittel im LKW-Tank in Verbindung gebracht wird und/oder bereits das aromatisierte physikalische Treibmittel über den wenigstens einen Einlass zugeführt wird

Dadurch wird gewährleistet, dass große Mengen an aromatisierten, physikalischen Treibmitteln im LKW-Tank vorliegen können.

Die Form des LKW-Tanks ist an sich beliebig. Es kann sich hierbei um einen bewegbaren LKW-Tank auf einem LKW-Anhänger oder einen stationären LKW-Tank handeln. Der LKW-Tank kann in einer bevorzugten Ausführungsform auch derart ausgebildet sein, dass beispielsweise ein Transport über Schienen ermöglicht wird.

Durch wenigstens eine Aufnahme wird es ermöglicht, dass der Druckbehälter in einen Getränkespender einsetzbar ist und das aromatisierte, physikalische Treibmittel direkt über eine Zuführleitung abgebbar ist.

Weiters ermöglicht der Gewindeaufsatz die Montage unterschiedlichster Füllventile, welche für den jeweiligen Befüllungsprozess des Druckbehälters optimal gewählt werden können.

Durch wenigstens ein Anschlussventil ist es möglich, den wenigstens einen Geschmacksstoff und das wenigstens eine physikalische Treibmittel über separate Behälter parallel und/oder sequenziell dem Druckbehälter zuzuführen.

Gemäß einer vorteilhaften Ausgestaltung der Erfindung ist es vorgesehen, dass der Druckbehälter als Tank ausgebildet ist und der Druckbehälter wenigstens einen Auslass mit wenigstens einer Druckleitung umfasst, wobei vorzugsweise vorgesehen ist, dass über die wenigstens eine Druckleitung Druckbehälter gemäß Anspruch 8 befüllbar sind.

Weiters ist es bevorzugt vorgesehen, dass der Grundkörper wenigstens einen Geschmackstoffbehälter und wenigstens einen Dosierer umfasst, wobei der wenigstens eine Geschmackstoff des wenigstens Geschmackstoffbehälters über den wenigstens einen Dosierer in den Grundkörper abgebbar ist.

Dadurch wird es ermöglicht, dass der wenigstens eine Geschmacksstoff in der richtigen Dosierung im Druckbehälter vorliegt und ein optimales Mischungsverhältnis zwischen dem wenigstens einen physikalischen Treibmittel und dem wenigstens einen Geschmacksstoff vorliegt.

Gemäß einem bevorzugten Ausführungsbeispiel der Erfindung ist es vorgesehen, dass an der wenigstens einen Druckleitung wenigstens eine Bypassleitung mit wenigstens einem Geschmackstoffbehälter und wenigstens einem Dosierer zur Abgabe des wenigstens einen Geschmackstoffes angeordnet ist.

Dadurch ist es möglich, dass der Bypassleitung die optimale Menge des wenigstens einen Geschmacksstoffes zugeführt wird.

Eine vorteilhafte Variante besteht darin, dass der Grundkörper als LKW-Tank ausgebildet ist und wenigstens einen Einlass zur Aufnahme wenigstens eines Geschmacksstoffes und/oder wenigstens eines physikalischen Treibmittels und/oder wenigstens eines aromatisierten physikalischen Treibmittels aufweist.

Dadurch wird ein effizienter Transport großer Mengen an aromatisierten, physikalischen Treibmitteln gewährleistet, da große Mengen an aromatisierten, physikalischen Treibmitteln in einem Druckbehälter vorliegen können.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1a-1c: Druckbehälter gemäß unterschiedlichen Ausführungsbeispielen, welche einen Druckbehälter in Form einer Kartusche aufweisen, in einer Ansicht von vorne,
- Fig. 2a-2e: Diagramme hinsichtlich Verfahren zur Befüllung von Druckbehältern mit Geschmacksstoffen und physikalischen Treibmitteln gemäß unterschiedlichen Ausführungsbeispielen, welche die unterschiedlichen Abläufe in der Befüllung schematisch darstellen,
- Fig. 3a-3c: Druckbehälter gemäß weiteren unterschiedlichen Ausführungsbeispielen, welche Druckbehälter in Form von Tanks aufweisen, in einer Ansicht von vorne,
- Fig. 4: Druckbehälter gemäß einem weiteren Ausführungsbeispiel, welches einen Druckbehälter in Form eines LKW-Tanks aufweist, in einer schematisch dargestellten perspektivischen Ansicht,
- Fig. 5: Verfahren zur Befüllung eines Druckbehälters gemäß dem in Fig. 1a gezeigten Ausführungsbeispiel über einen Druckbehälter gemäß dem in Fig. 3c gezeigten Ausführungsbeispiel, in einer Ansicht von vorne,
- Fig. 6: Getränkespender gemäß einem bevorzugten Ausführungsbeispiel mit einem Druckbehälter gemäß dem in Fig. 1a gezeigten Ausführungsbeispiel und zwei Gefäßen, in einer Ansicht von vorne und in einer Ansicht von der Seite.

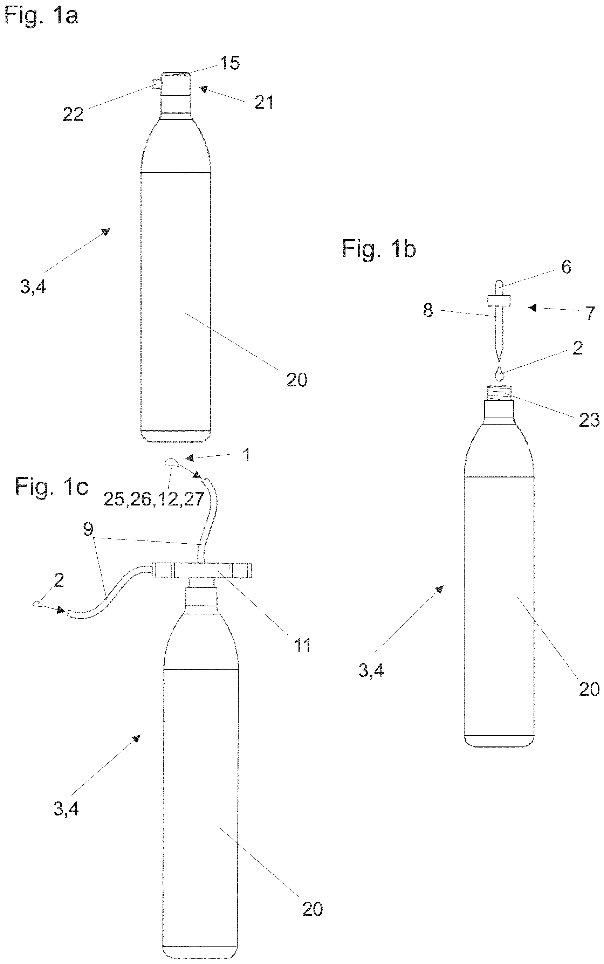

Fig. 1a zeigt einen Druckbehälter 3 in Form einer Kartusche 4 mit einem Grundkörper 20 und einem Füllventil 21, welches auf dem Grundkörper 20 angeordnet ist. Das Füllventil 21 ist für die Zuführung eines physikalischen Treibmittels 1 (ersichtlich in Fig. 1c) vorgesehen.

Das Füllventil 21 weist eine Aufnahme 15 auf. Die Form der Aufnahme 15 ist im Allgemeinen beliebig. Besonders bevorzug ist jedoch eine Aufnahme 15, welche ein Gewinde und/oder einen Steckverschluss aufweist.

Das Füllventil 21 weist ein zapfenförmiges Bypassventil 22 zum Anschluss einer Bypassleitung 10 auf, der für die Zuführung eines Geschmacksstoffes 2 (ersichtlich in Fig. 1c) vorgesehen ist.

Das Füllventil 21 (sowie das Anschlussventil 11 in Fig. 1c) verhindert den unerwünschten Austritt von physikalischen Treibmitteln 1 und wirkt einem Druckverlust entgegen.

Die Kartusche 4 ist im Wesentlichen zylindrisch ausgebildet, die Form der Kartusche 4 kann jedoch auch von dieser zylindrischen Ausbildung abweichen.

Fig. 1b zeigt einen Druckbehälter 3 in Form einer Kartusche 4. Das Füllventil 21 ist in dieser Darstellung abmontiert, wodurch der Gewindeaufsatz 23 am oberen Ende des Grundkörpers 20 ersichtlich ist.

Fig. 1c zeigt einen Druckbehälter 3 in Form einer Kartusche 4, wobei auf der Oberseite des Grundkörpers 20 ein Anschlussventil 11 angeordnet ist. An diesem Anschlussventil 11 sind zwei Druckleitungen 9 angeordnet.

Das Anschlussventil 11 ist zum einfacheren An- und Abschrauben mit einem Laschen für eine manuelle Montage und Demontage versehen.

In der linksseitig angeordneten Druckleitung 9 ist schematisch angedeutet, dass der Geschmacksstoff 2 dem Anschlussventil 11 zugeführt wird. In der oberhalb des Anschlussventiles 11 angeordneten Druckleitung 9 ist die Zuführung des physikalischen Treibmittels 1 schematisch angedeutet.

Das physikalische Treibmittel dieser Ausführungsform ist eine Mischung aus Kohlenstoffdioxid 25, Stickstoff 26, Sauerstoff 12 und Lachgas 27.

Der Geschmacksstoff 2 wird in die leere Kartusche 4 über eine Pipette 7 eingefüllt. Die Pipette 7 weist einen Dosierer 6 und einen Geschmacksstoffbehälter 8 auf.

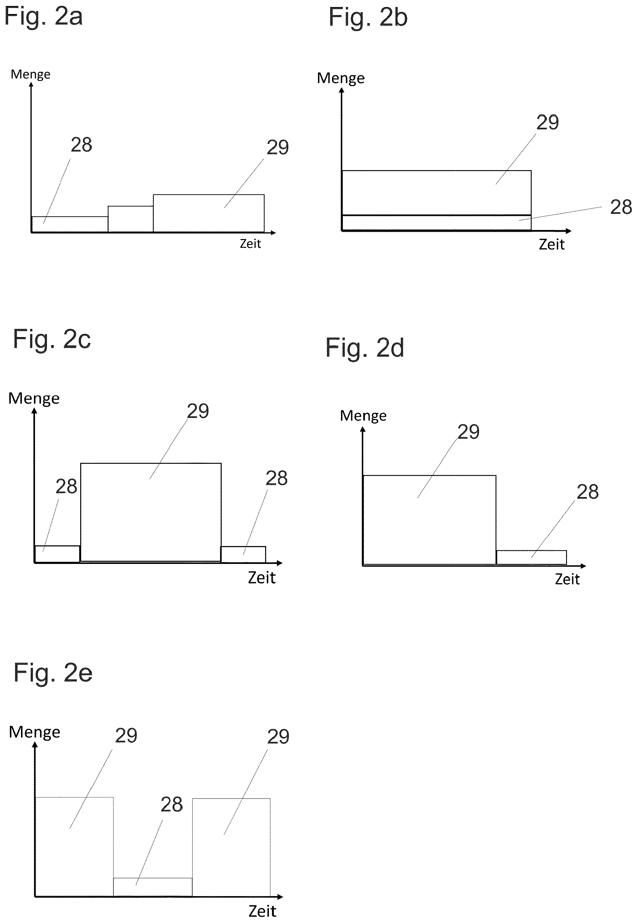

Fig. 2a zeigt ein Diagramm in Bezug auf ein Verfahren zur Befüllung des Druckbehälters 3 und stellt den Ablauf dieses Vorganges dar. Über die Zeitachse wird schematisch angedeutet, welche Mengen an Geschmacksstoffen 2 und/oder physikalischen Treibmitteln 1 dem Grundkörper 20 des Druckbehälters 3 zugeführt werden.

In einer ersten Phase erfolgt ein Geschmacksstoff-Füllvorgang 28. Die Menge des zugeführten Geschmacksstoffes 2 ist an sich beliebig und ist abhängig von der Konzentration des Geschmacksstoffes 2.

Die Intensität eines aromatisierten, physikalischen Treibmittels 1a kann durch das Mischungsverhältnis und somit durch die Menge an zugeführten Geschmacksstoffen 2 beeinflusst werden.

Die Zusammensetzung des Geschmacksstoffes 2 ist im Allgemeinen beliebig. Besonders bevorzugt liegt der Geschmacksstoff 2 in einem Trägermittel wie zum Beispiel Alkohol vor und/oder weist, vorzugsweise natürliche, Geschmacksverstärker und/oder Süßungsmittel auf.

In einer dritten Phase erfolgt ein Treibmittel-Füllvorgang 29. Die Menge des zugeführten physikalischen Treibmittels 1 ist an sich beliebig, richtet sich jedoch besonders bevorzugt an die Größe des zu befüllenden Druckbehälters 3.

Die zweite Phase dazwischen deutet schematisch einen Anschlussvorgang an. Während diesem Anschlussvorgang wird beispielsweise ein Füllventil 21 am Grundkörper 20 angebracht, um anschließend mit der dritten Phase fortzusetzen.

Fig. 2b zeigt ein Diagramm in Bezug auf ein Verfahren zur Befüllung des Druckbehälters 3, wobei der Treibmittel-Füllvorgang 29 und der Geschmacksstoff-Füllvorgang 28 parallel ausgeführt werden.

Dies ist beispielsweise über ein Verfahren mit einer Bypassleitung 10 oder über ein Anschlussventil 11 oder über eine weiteren Druckbehälter 3a möglich.

Die Parameter Druck, Mengenverhältnis und Temperatur des Einfüllvorganges sind an sich beliebig. Besonders vorteilhaft hat sich für eine Kartusche 4 ein Druck von ca. 250 bar, ein Mengenverhältnis von ca. 425ml flüssigen physikalischen Treibmittel 1 auf ca. 3 ml Geschmacksstoff 2 und eine Temperatur von ca. -50 Grad erwiesen. Der Geschmacksstoff 2 kann jedoch auch davon abweichende Mengen dieses Richtwertes vorweisen.

Fig. 2c zeigt ein Diagramm in Bezug auf ein Verfahren zur Befüllung des Druckbehälters 3, wobei die Phase des Geschmacksstoff-Füllvorgangs 28 durch eine Phase des Treibmittel-Füllvorgangs 29 unterbrochen wird.

Nach Abschluss der Füllvorgänge liegt mehr Volumen physikalisches Treibmittel 1 als Volumen der Geschmacksstoffe 2 im Druckbehälter 3 vor.

Fig. 2d zeigt ein Diagramm in Bezug auf ein Verfahren zur Befüllung des Druckbehälters 3, wobei in einer ersten Phase der Treibmittel-Füllvorgang 29 abgeschlossen wird und anschließend die Phase des Geschmacksstoff-Füllvorganges 28 durchgeführt wird.

Fig. 2e zeigt ein Diagramm in Bezug auf ein Verfahren zur Befüllung des Druckbehälters 3, wobei die Phase des Treibmittel-Füllvorganges 29 durch eine Phase des Geschmacksstoff-Füllvorganges 28 unterbrochen wird.

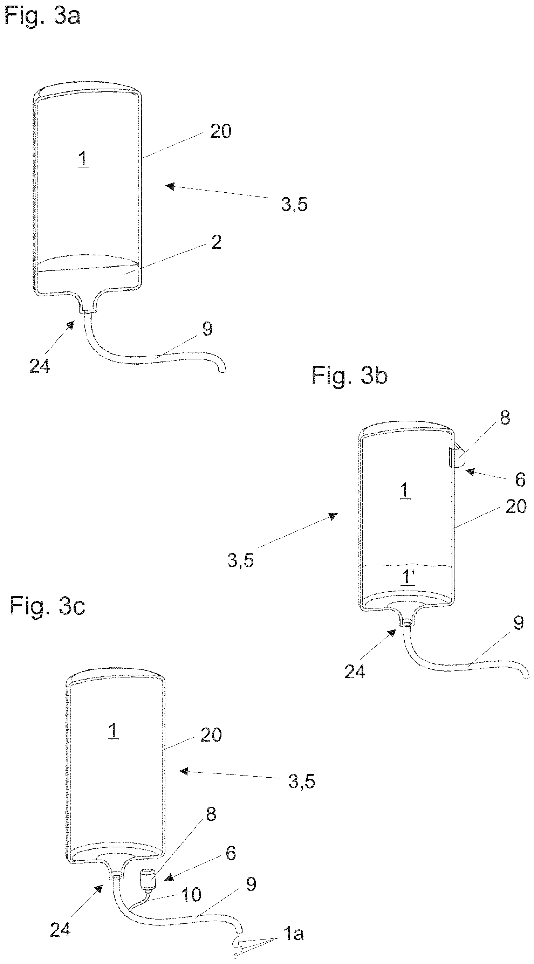

Fig. 3a zeigt den Druckbehälter 3 in Form eines Tankes 5. Der Tank 5 ist zylindrisch ausgebildet, kann jedoch im Allgemeinen von der zylindrischen Form abweichen.

Am unteren Ende des Tankes 5 ist ein Auslass 24 angeordnet. An dem Auslass 24 ist eine Druckleitung 9 angeordnet, über welche das aromatisierte, physikalische Treibmittel 1a abgeleitet wird.

Im Grundkörper 20 des Tankes 5 befindet sich im unteren Bereich der Geschmacksstoff 2. Über dem Geschmacksstoff 2 ist das physikalische Treibmittel 1 angeordnet.

Diese Darstellung dient der Veranschaulichung und im Allgemeinen liegt ein aromatisiertes, physikalisches Treibmittel 1a vor, wobei der Geschmacksstoff 2 und das physikalische Treibmittel 1 in einer Mischung verbunden sind.

Fig. 3b zeigt den Druckbehälter 3 in Form eines Tankes 5, wobei am Grundkörper 20 ein Geschmacksstoffbehälter 8 angeordnet ist. In diesem Geschmacksstoffbehälter 8 befindet sich der Geschmacksstoff 2 und kann in den Grundkörper 20 abgegeben werden.

Der Geschmacksstoffbehälter 8 kann hierbei innerhalb des Grundkörpers 20, außerhalb des Grundkörpers 20 mit einer Zuführung in den Grundkörper 20 oder bereichsweise im Grundkörper 20 angeordnet sein.

Im Grundkörper befinden sich das physikalische Treibmittel 1 und ein weiteres physikalisches Treibmittel 1'. Aus Übersichtlichkeitsgründen sind das physikalische Treibmittel 1 und das weitere physikalische Treibmittel 1' in unterschiedlichen Bereichen dargestellt, jedoch liegen diese im Allgemeinen in einer Mischung vor.

Über den Auslass 24 wird das aromatisierte, physikalische Treibmittel 1a (aus Übersichtlichkeitsgründen nicht dargestellt) und die Druckleitung 9 abgegeben.

Fig. 3c zeigt den Druckbehälter 3 in Form eines Tankes 5 mit einem Grundkörper 20, einem Auslass 24 und einer Druckleitung 9, wobei die Druckleitung 9 mit einer Bypassleitung 10 verbunden ist.

Die Bypassleitung 10 ist mit einem Geschmacksstoffbehälter 8 verbunden, der über einen Dosierer 6 die Menge an zugeführten Geschmacksstoffen 2 regelt.

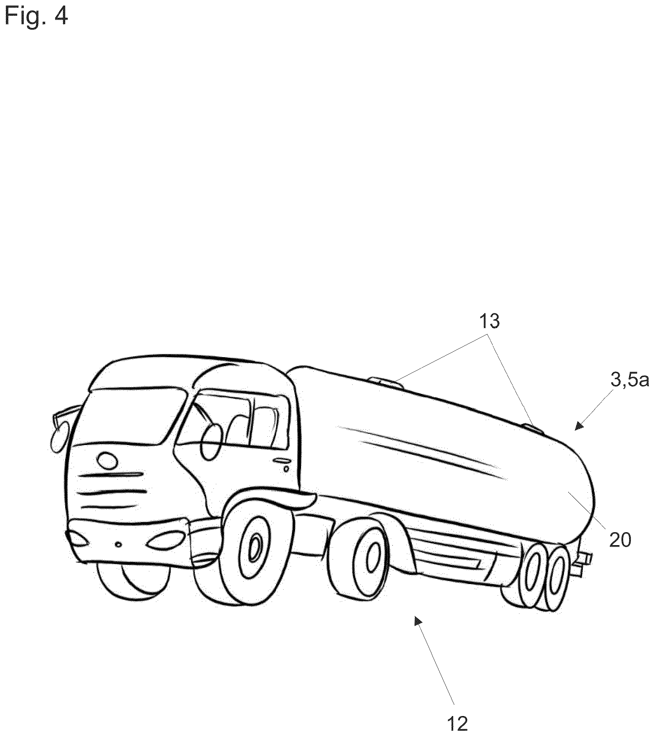

Fig. 4 zeigt den Druckbehälter 3 in Form eines LKW-Tankes 5a. Der LKW-Tank 5a ist auf einem LKW-Anhänger angeordnet. An der Oberseite des LKW-Tankes 5a sind zwei Einlässe 13 angeordnet.

Die Form der Einlässe 13 ist im Allgemeinen beliebig. Besonders bevorzugt sind die Einlässe 13 jedoch für Schläuche gedacht, welche den Geschmacksstoff 2 und/oder das physikalische Treibmittel 1 und/oder das aromatisierte, physikalische Treibmittel 1a dem Grundkörper 20 zuführen.

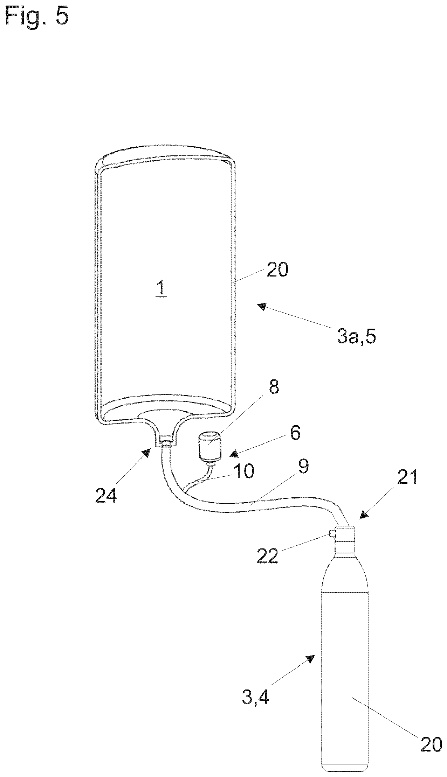

Fig. 5 zeigt einen weiteren Druckbehälter 3a in Form eines Tankes 5 und einen Druckbehälter 3 in Form einer Kartusche 4, wobei der Tank 5 und die Kartusche 4 über eine Druckleitung 9 verbunden sind.

Im Grundkörper 20 des Tankes 5 befindet sich das physikalische Treibmittel 1. Der Geschmacksstoff 2 (aus Übersichtlichkeitsgründen nicht dargestellt) ist im Geschmacksstoffbehälter 8 angeordnet. Der Geschmacksstoffbehälter 8 ist über den Dosierer 6 mit der Bypassleitung 10 verbunden. Die Bypassleitung 10 mündet in die Druckleitung 9.

Das aromatisierte, physikalische Treibmittel 1a (aus Übersichtlichkeitsgründen nicht dargestellt) ist über das untere Ende der Druckleitung 9 in das Füllventil 21 und in den Grundkörper 20 der Kartusche 4 abgebbar.

Das Bypassventil 22 ist mit keiner Bypassleitung 10 verbunden, da diese an der Druckleitung 9 angeordnet ist.

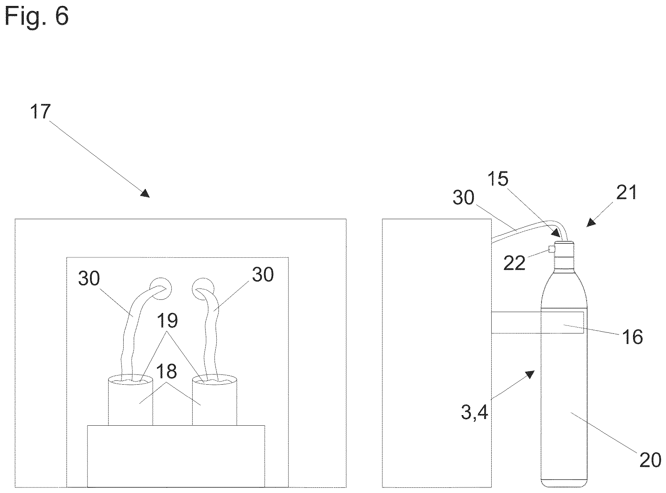

Fig. 6 zeigt einen Getränkespender 17 mit einer Halterung 16, wobei in der Halterung 16 der Druckbehälter 3 in Form einer Kartusche 4 angeordnet ist.

Am Füllventil 21 ist eine Aufnahme 15 angeordnet, wobei eine Zuführleitung 30 mit der Aufnahme 15 verbunden ist.

Die Zuführleitung 30 führt durch eine Öffnung im Gehäuse des Getränkespenders 17 zu einem Gefäß 18. Im Gefäß 18 befindet sich zum Verzehr geeignetes Wasser 19. Die Zuführleitung 30 ragt in das Wasser 19 und das aromatisierte, physikalische Treibmittel 1a (aus Übersichtlichkeitsgründen nicht dargestellt) ist von der Kartusche 4 über die Zuführleitung 30 an das Wasser 19 abgebbar.

Die Form der Halterung 16 ist an sich beliebig. Besonders bevorzugt ist eine mechanischen Haltevorrichtung oder eine Halterung 16 in Form einer Schraubvorrichtung.

### Bezugszeichenliste:

Physikalisches Treibmittel (1)
Weiteres physikalisches Treibmittel (1')
Aromatisiertes physikalisches Treibmittel (1a)
Geschmacksstoff (2)
Druckbehälter (3)
Weiterer Druckbehälter (3a)
Kartusche (4)
Tank (5)
LKW-Tank (5a)
Dosierer (6)
Pipette (7)
Geschmacksstoffbehälter (8)
Druckleitung (9)
Bypassleitung (10)
Anschlussventil (11)
Sauerstoff (12)
Einlass (13)
Aromatisiertes Getränk (14),
Aufnahme (15)
Halterung (16)
Getränkespender (17)
Gefäß (18)
Wasser (19)
Grundkörper (20)
Füllventil (21)
Bypassventil (22)
Gewindeaufsatz (23)
Auslass (24)
Kohlenstoffdioxid (25)
Stickstoff (26)
Lachgas (27)
Geschmacksstoff-Füllvorgang (28)
Treibmittel-Füllvorgang (29)
Zuführleitung (30)

## Patentansprüche

1. Verfahren zur Herstellung eines mit wenigstens einem aromatisierten, in Form eines Fluides vorliegenden, für den Verzehr geeigneten, physikalischen Treibmittel (1a) befüllten Druckbehälters (3), wobei wenigstens ein in Form eines Fluides vorliegendes, lebensmittelechtes physikalisches Treibmittel (1) und wenigstens ein für den Verzehr geeigneter Geschmacksstoff (2) in den Druckbehälter (3) eindosiert werden, **dadurch gekennzeichnet, dass** der Druckbehälter (3) einen Grundkörper (20) in Form einer Kartusche (4) mit wenigstens einem Gewindeaufsatz (23) und wenigstens einer Aufnahme (15) für einen Getränkespender (17) umfasst, wobei wenigstens ein Füllventil (21) zur Aufnahme wenigstens eines physikalischen Treibmittels (1) an dem wenigstens einen Gewindeaufsatz (23) angeordnet ist und wobei in den Druckbehälter (3) der wenigstens eine Geschmacksstoff (2) über wenigstens einen Dosierer (6) zugegeben wird und dem Druckbehälter (3) nach dem Anschluss wenigstens einer Druckleitung (9) wenigstens ein physikalisches Treibmittel (1) zugegeben wird, wobei der zugeführte wenigstens eine Geschmacksstoff (2) durch den Einfüllvorgang des wenigstens einen physikalischen Treibmittels (1) und/oder durch das bereits eingebrachte wenigstens eine physikalische Treibmittel (1) mit dem wenigstens einen physikalischem Treibmittel (1) in Verbindung gebracht wird und/oder der wenigstens eine Dosierer (6), vorzugsweise in Form einer Pipette (7), den wenigstens einen Geschmacksstoff (2), vorzugsweise tröpfchenweise, dem Druckbehälter (3) vor der Zugabe des wenigstens einen physikalischen Treibstoffes (1) zugeführt wird und/oder der wenigstens eine Geschmacksstoff (2) über wenigstens eine Bypassleitung (10), vorzugsweise wobei die Bypassleitung (10) gemeinsam mit der wenigstens einen Druckleitung (9) in wenigstens einem Anschlussventil (11) münden, während der Befüllung des Druckbehälters (3) mit dem wenigstens einen physikalischen Treibmittel (1), vorzugsweise sukzessive, über den wenigstens einen Dosierer (6) der wenigstens einen Bypassleitung (10) beigemengt wird.

2. Verfahren nach Anspruch 1, wobei die Zuführung des wenigstens einen Geschmacksstoffes (2) in der wenigstens einen Druckleitung (9) und/oder in der wenigstens einen Bypassleitung (10) und/oder im Wesentlichen bei der Einmündung der Druckleitung (9) in das Anschlussventil (11) erfolgt und/oder der erste Kontakt zwischen dem wenigstens einen Geschmacksstoff (2) und dem wenigstens einen physikalischen Treibmittel (1) im Druckbehälter (3) stattfindet.

3. Verfahren nach Anspruch 1 oder 2, wobei der wenigstens eine Geschmacksstoff (2) vor und/oder nach der Befüllung des Druckbehälters (3) mit wenigstens einem physikalischen Treibmittel (1) oder zwischen zwei Phasen der Befüllung des Druckbehälters (3) mit wenigstens einem physikalischen Treibmittel (1) dem wenigstens einen physikalischen Treibmittel (1) beigemengt wird.

4. Verfahren nach einem der vorangehenden Ansprüche, wobei der Druckbehälter (3) über wenigstens eine Druckleitung (9) mit wenigstens einem weiteren Druckbehälter (3a), vorzugsweise in Form eines Tanks (5), verbunden ist und der Druckbehälter (3) über diese wenigstens eine Druckleitung (9) und diesen wenigstens einen weiteren Druckbehälter (3a) befüllt wird.

5. Verfahren nach Anspruch 4, wobei das aromatisierte physikalische Treibmittel (1a) bereits im wenigstens einen weiteren Druckbehälter (3a) angeordnet ist und/oder der wenigstens eine Geschmacksstoff (2) über wenigstens einen Dosierer (6) dem wenigstens einen weiteren Druckbehälter (3a) zugeführt wird, wobei das wenigstens eine physikalische Treibmittel (1) vor und/oder nach der Beifügung des wenigstens einen physikalischen Treibmittels (1) in den wenigstens einen weiteren Druckbehälter (3a) im wenigstens einen weiteren Druckbehälter (3a) angeordnet ist, und/oder der wenigstens eine Geschmacksstoff (2) über wenigstens einen Dosierer (6) und wenigstens einer Bypassleitung (10) dem wenigstens einen physikalischen Treibmittel (1) zugeführt wird, wobei die wenigstens eine Bypassleitung (10) mit der wenigstens einen Druckleitung (9) verbunden ist.

6. Verfahren nach einem der vorangehenden Ansprüche, wobei der wenigstens eine Druckbehälter (3) in Form eines LKW-Tanks (5a) vorgesehen ist und wenigstens ein Einlass (13) zur Zufuhr des wenigstens einen physikalischen Treibmittels (1) und des wenigstens einen Geschmacksstoffes (2) und/oder des wenigstens einen aromatisierten physikalischen Treibmittels (1a) vorgesehen ist, wobei vorzugsweise vorgesehen ist, dass wenigstens ein Einlass (13) für die Zufuhr des wenigstens einen physikalischen Treibmittels (1) und wenigstens ein Einlass (13) zur Zufuhr des wenigstens einen Geschmacksstoffes (2) vorgesehen sind, wobei der wenigstens eine Geschmacksstoff (2) mit dem wenigstens einen physikalischen Treibmittel (1) im LKW-Tank (5a) in Verbindung gebracht wird und/oder bereits das aromatisierte physikalische Treibmittel (1a) über den wenigstens einen Einlass (13) zugeführt wird.

7. Verfahren zur Herstellung eines zum Verzehr geeigneten aromatisierten Getränkes (14) mittels eines wenigstens eine Halterung (16) zur Aufnahme eines Druckbehälters (3) aufweisenden Getränkespenders (12), **dadurch gekennzeichnet, dass** im Druckbehälter (3) wenigstens ein aromatisiertes, in Form eines Fluides vorliegendes, für den Verzehr geeignetes, physikalisches Treibmittel (1a) angeordnet ist und wobei der Druckbehälter (3) einen Grundkörper (20) in Form einer Kartusche (4) mit wenigstens einem Gewindeaufsatz (23) und wenigstens einer Aufnahme (15) für einen Getränkespender (17) umfasst, wobei wenigstens ein Füllventil (21) zur Aufnahme wenigstens eines physikalischen Treibmittels (1) an dem wenigstens einen Gewindeaufsatz (23) angeordnet ist, wobei das physikalische Treibmittel (1a) durch wenigstens einen Geschmacksstoff aromatisiert ist, und wenigstens eine Aufnahme (15) des wenigstens einen Druckbehälters (3) über wenigstens eine Zuführleitung (30) eines Getränkespenders (17) mit einem zum Verzehr geeigneten Wasser eines Gefäßes (18) verbunden wird und dem Wasser das aromatisierte, physikalische Treibmittel (1a) zugeführt wird, sodass das Wasser im Gefäß (18) in einem Prozessschritt mit dem wenigstens einen physikalischen Treibmittel und dem Geschmacksstoff angereichert wird und die Dosierung des Geschmacksstoffes über die Dosierung der Anreicherung durch das physikalische Treibmittel beeinflussbar ist.

8. Druckbehälter (3) zur Aufnahme von physikalischen Treibmitteln (1), wobei im Druckbehälter (3) wenigstens ein aromatisiertes, in Form eines Fluides vorliegendes, für den Verzehr geeignetes, physikalisches Treibmittel (1a) angeordnet ist, **dadurch gekennzeichnet, dass** der Druckbehälter (3) einen Grundkörper (20) in Form einer Kartusche (4) mit wenigstens einem Gewindeaufsatz (23) und wenigstens einer Aufnahme (15) für einen Getränkespender (17) umfasst, wobei wenigstens ein Füllventil (21) zur Aufnahme wenigstens eines physikalischen Treibmittels (1) an dem wenigstens einen Gewindeaufsatz (23) angeordnet ist, wobei vorzugsweise vorgesehen ist, dass am wenigstens einen Füllventil (21) wenigstens ein Bypassventil (22) zur Aufnahme des wenigstens einen Geschmacksstoffes (2) angeordnet ist und/oder wenigstens ein Anschlussventil (11) an dem wenigstens einen Gewindeaufsatz (23) angeordnet ist, wobei das wenigstens eine physikalische Treibmittel (1) und der wenigstens eine Geschmacksstoff über wenigstens eine Druckleitung (9) dem wenigstens einen Anschlussventil (11) zuführbar sind.

9. Druckbehälter (3) nach Anspruch 8, wobei der Druckbehälter (3) als Tank (5) ausgebildet ist und der Druckbehälter (3) wenigstens einen Auslass (24) mit wenigstens einer Druckleitung (9) umfasst, wobei vorzugsweise vorgesehen ist, dass über die wenigstens eine Druckleitung (9) Druckbehälter (3) gemäß Anspruch 8 befüllbar sind.

10. Druckbehälter (3) nach Anspruch 8 oder 9, wobei der Grundkörper (20) wenigstens einen Geschmackstoffbehälter (8) und wenigstens einen Dosierer (6) umfasst, wobei der wenigstens eine Geschmackstoff (2) des wenigstens Geschmackstoffbehälters (8) über den wenigstens einen Dosierer (6) in den Grundkörper (20) abgebbar ist und/oder an der wenigstens einen Druckleitung (9) wenigstens eine Bypassleitung (10) mit wenigstens einem Geschmackstoffbehälter (8) und wenigstens einem Dosierer (6) zur Abgabe des wenigstens einen Geschmackstoffes (2) angeordnet ist.

11. Druckbehälter (3) nach einem der Ansprüche 8 bis 10, wobei der Grundkörper (20) als LKW-Tank (5a) ausgebildet ist und wenigstens einen Einlass (13) zur Aufnahme wenigstens eines Geschmacksstoffes (2) und/oder wenigstens eines physikalischen Treibmittels (1) und/oder wenigstens eines aromatisierten physikalischen Treibmittels (1a) aufweist.

12. Getränkespender (12) mit wenigstens einer Halterung (16) zur Aufnahme wenigstens eines Druckbehälters (3) und wenigstens einer Zuführleitung (30), **dadurch gekennzeichnet, dass** wenigstens ein Druckbehälter (3) nach einem der Ansprüche 8 bis 10 in der wenigstens einen Halterung (16) angeordnet ist und über die wenigstens eine Zuführleitung (30) mit wenigstens einem Gefäß (18) verbindbar ist, wobei im Druckbehälter (3) wenigstens ein aromatisiertes, in Form eines Fluides vorliegendes, für den Verzehr geeignetes, physikalisches Treibmittel (1a) angeordnet ist und wobei der Druckbehälter (3) einen Grundkörper (20) in Form einer Kartusche (4) mit wenigstens einem Gewindeaufsatz (23) und wenigstens einer Aufnahme (15) für einen Getränkespender (17) umfasst, wobei wenigstens ein Füllventil (21) zur Aufnahme wenigstens eines physikalischen Treibmittels (1) an dem wenigstens einen Gewindeaufsatz (23) angeordnet ist.

## Claims

1. A process for the production of a pressure container (3) filled with at least one flavoured physical propellant (1a) which is present in the form of a fluid and is suitable for consumption, wherein at least one food-safe physical propellant (1) which is present in the form of a fluid and at least one flavouring (2) suitable for consumption are metred into the pressure container (3), **characterised in that** the pressure container (3) has a main body (20) in the form of a cartridge having at least one thread attachment (23) and at least one receiving means (15) for a drink dispenser (17), wherein at least one filling valve (21) for receiving at least one physical propellant (1) is arranged on the at least one thread attachment (23) and wherein the at least one flavouring (2) is added to the pressure container (3) by way of at least one metering means (6) and at least one physical propellant (1) is added to the pressure container (3) after the connection of at least one pressure line (9), wherein the added at least one flavouring (2) is brought into relationship with the at least one physical propellant (1) by the operation of introducing the at least one physical propellant (1) and/or by the already introduced at least one physical propellant (1) and/or the at least one metering means (6), preferably in the form of a pipette (7), feeds the at least one flavouring (2), preferably dropwise, to the pressure container (3) prior to the addition of the at least one physical propellant (1) and/or the at least one flavouring (2) is added by way of at least one bypass line (10), preferably wherein the bypass line (10) jointly with the at least one pressure line (9) open into at least one connectig valve (11), during filling of the pressure container (3) with the at least one physical propellant (1), preferably successively, by way of the at least one metering means (6) of the at least one bypass line (10).

2. A process according to claim 1 wherein the feed of the at least one flavouring (2) is effected in the at least one pressure line (9) and/or in the at least one bypass line (10) and/or substantially when the pressure line (9) opens into the connecting valve (11) and/or the first contact takes place between the at least one flavouring (2) and the at least one physical propellant (1) in the pressure container (3).

3. A process according to claim 1 or claim 2 wherein the at least one flavouring (2) is added to the at least one physical propellant (1) prior to and/or after filling of the pressure container (3) with at least one physical propellant (1) or between two phases of the filling of the pressure container (3) with at least one physical propellant (1).

4. A process according to one of the preceding claims wherein the pressure container (3) is connected by way of at least one pressure line (9) to at least one further pressure container (3a), preferably in the form of a tank (5), and the pressure container (3) is filled by way of said at least one pressure line (9) and said at least one further pressure container (3a).

5. A process according to claim 4 wherein the flavoured physical propellant (1a) is already arranged in the at least one further pressure container (3a) and/or the at least one flavouring (2) is fed by way of at least one metering means (6) to the at least one further pressure container (3a), wherein the at least one physical propellant (1) is arranged in the at least one further pressure container (3) prior to and/or after the addition of the at least one physical propellant (1) into the at least one further pressure container (3a) and/or the at least one flavouring (2) is fed by way of at least one metering means (6) and at least one bypass line (10) to the at least one physical propellant (1), wherein the at least one bypass line (10) is connected to the at least one pressure line (9).

6. A process according to one of the preceding claims wherein the at least one pressure container (3) is provided in the form of a truck tank (5a) and there is provided at least one inlet (13) for the feed of the at least one physical propellant (1) and the at least one flavouring (2) and/or the at least one flavoured physical propellant (1a), wherein it is preferably provided that there are provided at least one inlet (13) for the feed of the at least one physical propellant (1) and at least one inlet (13) for the feed of the at least one flavouring (2), wherein the at least one flavouring (2) is brought into relationship with the at least one physical propellant (1) in the truck tank (5a) and/or the flavoured physical propellant (1a) is already fed by way of the at least one inlet (13).

7. A process for producing a flavoured drink (14) suitable for consumption by means of at least one drink dispenser (12) having at least one holder (16) for receiving a pressure container (3), **characterised in that** arranged in the pressure container (3) is at least one flavoured physical propellant (1a) which is present in the form of a fluid and is suitable for consumption and wherein the pressure container (3) includes a main body (20) in the form of a cartridge (4) having at least one thread attachment (23) and at least one receiving means (13) for a drink dispenser (17), wherein at least one filling valve (21) for receiving at least one physical propellant (1) is arranged on the at least one thread attachment (23), wherein the physical propellant (1a) is flavoured by at least one flavouring and at least one receiving means (15) of the at least one pressure container (3) is connected by way of at least one feed line (30) of a drink dispenser (17) to a water suitable for consumption of a vessel (18) and the flavoured physical propellant (1a) is fed to the water so that the water in the vessel (18) in a process step is enriched with the at least one physical propellant and the flavouring and metering of the flavouring can be influenced by way of the metering of the enrichment by the physical propellant.

8. A pressure container (3) for receiving physical propellants (1), wherein arranged in the pressure container (3) is at least one flavoured physical propellant (1a) which is present in the form of a fluid and is suitable for consumption, **characterised in that** the pressure container (3) includes a main body (20) in the form of a cartridge (4) having at least one thread attachment (23) and at least one receiving means (15) for a drink dispenser (17), wherein at least one filling valve (21) for receiving at least one physical propellant (1) is arranged on the at least one thread attachment (23), wherein it is preferably provided that arranged on the at least one filling valve (21) is at least one bypass valve (20) for receiving the at least one flavouring (2) and/or at least one connecting valve (11) is arranged on the at least one thread attachment (23), wherein the at least one physical propellant (1) and the at least one flavouring (2) can be fed to the at least one connecting valve (11) by way of at least one pressure line (9).

9. A pressure container (3) according to claim 8 wherein the pressure container (3) is in the form of a tank (5) and the pressure container (3) includes at least one outlet (24) with at least one pressure line (9), wherein it is preferably provided that pressure containers (3) according to claim 8 can be filled by way of the at least one pressure line (9).

10. A pressure container (3) according to claim 8 or claim 9 wherein the main body (20) includes at least one flavouring container (8) and at least one metering means (6), wherein the at least one flavouring (2) of the at least one flavouring container (8) can be discharged into the main body (20) by way of the at least one metering means (6) and/or arranged on the at least one pressure line (9) is at least one bypass line (10) with at least one flavouring container (8) and at least one metering means (6) for discharge of the at least one flavouring (2).

11. A pressure container (3) according to one of claims 8 to 10 wherein the main body (20) is in the form of a truck tank (5a) and has at least one inlet (13) for receiving at least one flavouring (2) and/or at least one physical propellant (1) and/or at least one flavoured physical propellant (1a).

12. A drink dispenser (12) having at least one holder (16) for receiving at least one pressure container (3) and at least one feed line (30), **characterised in that** at least one pressure container (3) according to one of claims 8 to 10 is arranged in the at least one holder (16) and can be connected by way of the at least one feed line (30) to at least one vessel (18), wherein arranged in the pressure container (3) is at least one flavoured physical propellant (1a) which is present in the form of a fluid and is suitable for consumption and wherein the pressure container (3) includes a main body (20) in the form of a cartridge (4) having at least one thread attachment (23) and at least one receiving means (15) for a drink dispenser (17), wherein at least one filling valve (21) for receiving at least one physical propellant (1) is arranged on the at least one thread attachment (23).

## Revendications

1. Procédé de fabrication d'un réservoir sous pression (3) rempli d'au moins un agent propulseur physique aromatisé (1a) propre à la consommation, se présentant sous la forme d'un fluide, dans lequel au moins un agent propulseur physique (1) à usage alimentaire, se présentant sous la forme d'un fluide et au moins un agent aromatique (2) propre à la consommation sont introduits dans le réservoir sous pression (3), **caractérisé en ce que** le réservoir sous pression (3) comprend un corps de base (20) sous la forme d'une cartouche (4) avec au moins un embout fileté (23) et au moins un logement (15) pour un distributeur de boissons (17), dans lequel au moins une soupape de remplissage (21) est disposée sur l'au moins un embout fileté (23), pour le logement d'au moins un agent propulseur physique (1), et dans lequel, dans le réservoir sous pression (3), l'au moins un agent aromatique (2) est introduit par l'intermédiaire d'au moins un doseur (6) et, dans le réservoir sous pression (3), après le raccordement d'au moins une conduite sous pression (9), au moins un agent propulseur physique (1) est introduit, dans lequel l'au moins un agent aromatique (2) introduit est mis en relation avec l'au moins un agent propulseur physique (1) par le processus d'introduction de l'au moins un agent propulseur physique (1) et/ou par l'au moins un agent propulseur physique (1) déjà introduit et/ou l'au moins un doseur (6), de préférence sous la forme d'une pipette (7), introduit l'au moins un agent aromatique (2), de préférence sous la forme de gouttelettes, dans le réservoir sous pression (3) avant l'ajout de l'au moins un agent propulseur physique (1) et/ou l'au moins un agent aromatique (2) est mélangé, par l'intermédiaire d'au moins une conduite de dérivation (10), de préférence dans lequel la conduite de dérivation (10) débouche, conjointement avec l'au moins une conduite sous pression (9), dans au moins une soupape de raccordement (11), pendant le remplissage du réservoir sous pression (3) avec l'au moins un agent propulseur physique (1), de préférence de manière successive, par l'intermédiaire de l'au moins un doseur (6) de l'au moins une conduite de dérivation (10).

2. Procédé selon la revendication 1, dans lequel l'introduction de l'au moins un agent aromatique (2) a lieu dans l'au moins une conduite sous pression (9) et/ou dans l'au moins une conduite de dérivation (10) et/ou globalement près de l'embouchure de la conduite sous pression (9) dans la soupape de raccordement (11) et/ou le premier contact entre l'au moins un agent aromatique (2) et l'au moins un agent propulseur physique (1) a lieu dans le réservoir sous pression (3).

3. Procédé selon la revendication 1 ou 2, dans lequel l'au moins un agent aromatique (2) est ajouté avant et/ou après le remplissage du réservoir sous pression (3) avec au moins un agent propulseur physique (1) ou entre deux phases de remplissage du réservoir sous pression (3) avec au moins un agent propulseur physique (1), à l'au moins un agent propulseur physique (1).

4. Procédé selon l'une des revendications précédentes, dans lequel le réservoir sous pression (3) est relié, par l'intermédiaire d'au moins une conduite sous pression (9), avec au moins un autre réservoir sous pression (3a), de préférence sous la forme d'un réservoir (5) et le réservoir sous pression (3) est rempli par l'intermédiaire de cette au moins une conduite sous pression (9) et cet au moins un autre réservoir sous pression (3a).

5. Procédé selon la revendication 4, dans lequel l'agent propulseur physique aromatisé (1a) est déjà disposé dans l'au moins un autre réservoir sous pression (3a) et/ou l'au moins un agent aromatique (2) est introduit, par l'intermédiaire d'au moins un doseur (6), dans l'au moins un autre réservoir sous pression (3a), dans lequel l'au moins un agent propulseur physique (1) est disposé, avant et/ou après l'ajout de l'au moins agent propulseur physique (1) dans l'au moins un autre réservoir sous pression (3a), dans l'au moins un autre réservoir sous pression (3a) et/ou l'au moins un agent aromatique (2) est ajouté, par l'intermédiaire d'au moins un doseur (6) et d'au moins une conduite de dérivation (10), à l'au moins un agent propulseur physique (1), dans lequel l'au moins une conduite de dérivation (10) est reliée avec l'au moins une conduite sous pression (9).

6. Procédé selon l'une des revendications précédentes, dans lequel l'au moins un réservoir sous pression (3) est conçu sous la forme d'un réservoir de poids-lourd (5a) et au moins une entrée (13) est prévue pour l'introduction de l'au moins un agent propulseur physique (1) et de l'au moins un agent aromatique (2) et/ou de l'au moins un agent propulseur physique aromatisé (1a), dans lequel, de préférence, il est prévu qu'au moins une entrée (13) soit prévue pour l'introduction de l'au moins un agent propulseur physique (1) et au moins une entrée (13) soit prévue pour l'introduction de l'au moins un agent aromatique (2), dans lequel l'au moins un agent aromatique (2) est amené en relation avec l'au moins un agent propulseur physique (1) dans le réservoir de poids-lourd (5a) et/ou l'agent propulseur physique aromatisé (1a) est déjà introduit par l'intermédiaire de l'au moins une entrée (13).

7. Procédé de fabrication d'une boisson aromatisée propre à la consommation (14) au moyen d'un distributeur de boissons (12) comprenant au moins un support (16) pour le logement d'un réservoir sous pression (3), **caractérisé en ce que**, dans le réservoir sous pression (3) est disposé au moins un agent propulseur physique (1a), se présentant sous la forme d'un fluide, propre à la consommation et dans lequel le réservoir sous pression (3) comprend un corps de base (20) sous la forme d'une cartouche (4) avec au moins un embout fileté (23) et au moins un logement (15) pour un distributeur de boissons (17), dans lequel au moins une soupape de remplissage (21) est disposée pour le logement d'au moins un agent propulseur physique (1), sur laquelle est disposé au moins un embout fileté (23), dans lequel l'agent propulseur physique (1a) est aromatisé par au moins un agent aromatique et au moins un logement (15) de l'au moins un réservoir sous pression (3) est relié, par l'intermédiaire d'au moins une conduite d'alimentation (30) d'un distributeur de boissons (17), avec une eau propre à la consommation d'un récipient (18) et l'agent propulseur physique aromatisé (1a) est ajouté à l'eau, de façon à ce que l'eau du récipient (18) soit enrichie, en une seule étape, avec l'au moins un agent propulseur physique et l'agent aromatique et à ce que le dosage de l'agent aromatique puisse être contrôlé à l'aide du dosage de l'enrichissement par l'agent propulseur physique.

8. Réservoir sous pression (3), pour le logement d'agents propulseurs physiques (1), dans lequel, dans le réservoir sous pression (3), est disposé au moins un agent propulseur physique (1a) aromatisé, se présentant sous la forme d'un fluide, propre à la consommation, **caractérisé en ce que** le réservoir sous pression (3) comprend un corps de base (20) sous la forme d'une cartouche (4) avec au moins un embout fileté (23) et au moins un logement (15) pour un distributeur de boissons (17), dans lequel une soupape de remplissage (21) est disposé, pour le logement d'au moins un agent propulseur physique (1), sur d'au moins un embout fileté (23), dans lequel, de préférence, il est prévu que, sur l'au moins une soupape de remplissage (21), au moins une soupape de dérivation (22) pour le logement de l'au moins un agent aromatique (2) soit disposée et/ou au moins une soupape de raccordement (11) soit disposée sur l'au moins un embout fileté (23), dans lequel l'au moins un agent propulseur physique (1) et l'au moins un agent aromatique peuvent être introduits dans l'au moins une soupape de raccordement (11) par l'intermédiaire d'au moins une conduite sous pression (9).

9. Réservoir sous pression (3) selon la revendication 8, dans lequel le réservoir sous pression (3) est conçu comme un réservoir (5) et le réservoir sous pression (3) comprend au moins une sortie (24) avec au moins une conduite sous pression (9), dans lequel, de préférence, il est prévu que le réservoir sous pression (3) selon la revendication 8 puisse être rempli par l'intermédiaire de l'au moins une conduite sous pression (9).

10. Réservoir sous pression (3) selon la revendication 8 ou 9, dans lequel le corps de base (20) comprend au moins un réservoir d'agent aromatique (8) et au moins un doseur (6), dans lequel l'au moins un agent aromatique (2) de l'au moins un réservoir d'agent aromatique (8) peut être distribué par l'intermédiaire de l'au moins un doseur (6) dans le corps de base (20) et/ou, sur l'au moins une conduite sous pression (9), est disposée au moins une conduite de dérivation (10) avec au moins un réservoir d'agent aromatique (8) et au moins un doseur (6) pour la distribution de l'au moins un agent aromatique (2).

11. Réservoir sous pression (3) selon l'une des revendications 8 à 10, dans lequel le corps de base (20) est conçu sous la forme d'un réservoir de poids-lourd (5a) et comprend au moins une entrée (13) pour le logement d'au moins un agent aromatique (2) et/ou au moins un agent propulseur physique (1) et/ou au moins un agent propulseur physique aromatisé (1a).

12. Distributeur (12) avec au moins un support (16) pour le logement d'au moins un réservoir sous pression (3) et au moins une conduite d'alimentation (30), **caractérisé en ce qu'**au moins un réservoir sous pression (3) selon l'une des revendications 8 à 10 est disposé dans l'au moins un support (16) et peut être relié, par l'intermédiaire de l'au moins une conduite d'alimentation (30), avec au moins un récipient (18), dans lequel, dans le réservoir sous pression (3), est disposé au moins un agent propulseur physique aromatisé (1a) propre à la consommation, se présentant sous la forme d'un fluide et dans lequel le réservoir sous pression (3) comprend un corps de base (20) sous la forme d'une cartouche (4) avec au moins un embout fileté (23) et au moins un logement (15) pour un distributeur de boissons (17), dans lequel au moins une soupape de remplissage (21) est disposée sur l'au moins un embout fileté (23) pour le logement d'au moins un agent propulseur physique (1).
